Europäisches Patentamt

European Patent Office

Office européen des brevets

(19)

(11) Publication number: **0 070 261**

**A2**

(12) **EUROPEAN PATENT APPLICATION**

(21) Application number: **82830179.6**

(22) Date of filing: **16.06.82**

(51) Int. Cl.³: **A 01 F 12/16**

(30) Priority: **13.07.81 IT 6796981**

(43) Date of publication of application:
**19.01.83 Bulletin 83/3**

(84) Designated Contracting States:
**BE DE FR GB**

(71) Applicant: **PIETRO LAVERDA S.p.A.**

**I-36042 Breganze (Vicenza)(IT)**

(72) Inventor: **Raineri, Giuseppe**
**Via Bellini 20/22**
**I-36061 Bassano del Grappa (Vicenza)(IT)**

(74) Representative: **Notaro, Giancarlo et al,**
**c/o Jacobacci-Casetta & Perani S.p.A. Via Alfieri, 17**
**I-10121 Torino(IT)**

(54) **Combine harvester.**

(57) In a combine harvester (1) including a base wall (11) onto which the product is fed and a conveyor roll (10) located above the base wall (11) to move the product over this wall, the base wall (11) includes a flap (12) which can be opened downwardly to discharge any excess product or foreign bodies collected by the harvester (1) onto the ground. Means (14,15,16) are provided for locking the flap (12) in its closed position. The flap (12) moves freely towards its open position from the closed position when it is unlocked by the force exerted by the excess product or foreign bodies.

FIG. 2

EP 0 070 261 A2

Croydon Printing Company Ltd.

- 1 -

Combine Harvester

The present invention relates to combine harvesters.

In particular, the invention concerns a combine harvester including a base wall onto which the harvested product is fed, and a conveyor roll located above the base wall for moving the product over this wall, of the type in which the base wall includes a flap which can be opened downwardly to discharge any excess product or foreign bodies onto the ground.

A combine harvester of the type described above forms the subject of patent application no: 53321-B/80 filed by the same Applicants.

In this combine harvester, the flap forms part of the base wall onto which the product is fed and is maintained resiliently in its closed position. This arrangement is not found to be entirely satisfactory since any foreign bodies and excessive accumulations of the product are not always discharged automatically, and these tend to engulf the threshing unit with which the harvester is provided. Indeed, the flap sometimes opens to allow the excess material to pass beyond the feed roll but closes immediately thereafter to trap this material inside the harvester.

The object of the present invention is to provide a combine harvester of the aforesaid type, which allows this drawback to be avoided.

The main characteristic of the combine harvester according to the invention lies in the fact that it includes means for snap-locking the flap in its closed position, and in that this flap is freely movable from its closed position to its open position when it is unlocked by the force exerted by the excess product or foreign bodies.

Thus, in the combine harvester according to the present invention, when any excess product or any foreign bodies exert sufficient force on the flap to unlock it from its closed position, the flap opens immediately and completely, and remains in its open position allowing the product to be discharged onto the ground.

According to another preferred characteristic, the combine harvester according to the invention is provided with signalling means for indicating when the flap is open.

Further characteristics and advantages of the present invention will emerge from the following description given with reference to the appended drawings, provided purely by way of non-limiting example, in which,

Figure 1 is a schematic side view of the front part of a combine harvester according to the invention;

Figure 2 is a schematic perspective view of a detail of Figure 1, and

Figures 3 and 4 are two side views of the detail of Figure 2 in two different conditions of operation.

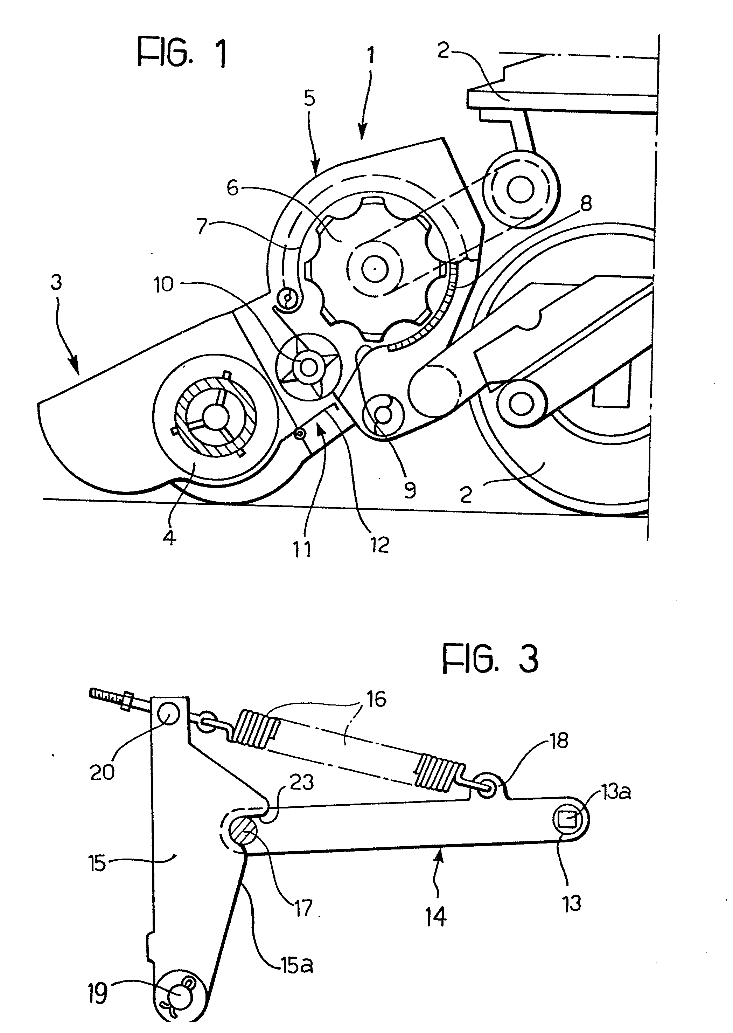

In Figure 1 , a combine harvester of the general type described and illustrated in patent application No. 53321-B/80 filed by the same Applicants is generally indicated 1.

The combine harvester 1 include wheels 2 (of which only the front wheels are visible in Figure 1) on which a fixed support structure 2 is mounted. At the front, the combine harvester 1 carries a cutting table 3 including a feed auger 4 for feeding the product harvested to a threshing unit 5 which, in the practical embodiment illustrated, is of the axial-flow type.

The unit 5 includes a thresher-separator cylinder 6 mounted rotatably on the fixed structure of the harvester about an axis transverse the longitudinal axis of the harvester itself, and a separator casing 7 in the form of a perforated tubular body surrounding the thresher-separator cylinder 6.

A thresher concave 8 in the form of a concave grille surrounds the lower part of the cylinder 6 not covered by the casing 7. The latter also has an aperture 9 at one end for allowing the product conveyed by the feed auger 4 to be fed into the casing 7.

Immediately upstream of the aperture 9 is located a feed roll 10 for facilitating the conveyance of the product into the separator casing 7.

The feed roll 10 is mounted rotatably about an axis transverse the longitudinal axis of the harvester above a base wall 11 over which the product is made to advance.

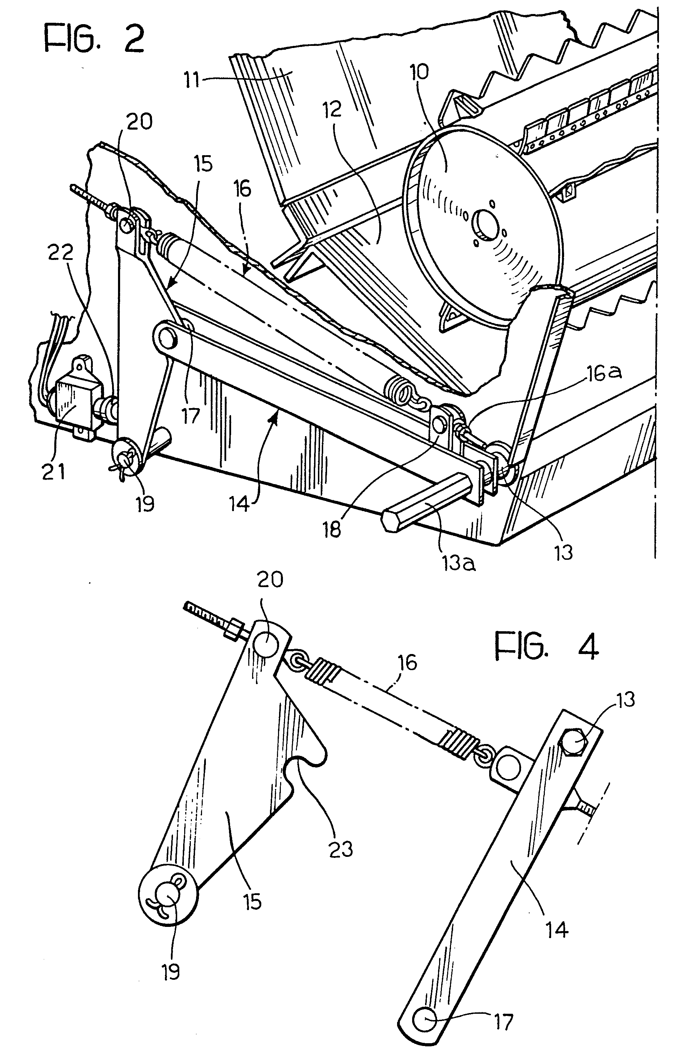

As illustrated in detail in Figure 2, the base wall 11 below the feed roll 10 includes a flap 12 which can open downwardly and is mounted at its front edge on a support shaft 13, which, in its turn, is mounted rotatably on the fixed structure of the harvester about an axis transverse the longitudinal axis of the harvester itself.

When excessive accumulations of product or any foreign bodies are fed into the space between the feed roll 10 and the flap 12, the latter is subject to a force which tends to open it.

According to the present invention, the flap 12 is provided with means for snap-locking it in its closed position. These locking means comprise a catch member 14 carried by the support shaft 13 of the flap 12, a locking member 15, and a spring 16 the load of which is adjustable as will be described below, which biases the locking member 15 into engagement with the catch member 14.

This catch member is constituted by a lever having one end connected to the support shaft 13 of the flap and the opposite end provided with a roller 17 arranged with its axis transverse the longitudinal axis of the harvester.

The locking member 15, on the other hand, is constituted by a lever having a first end 19 articulated to the fixed structure of the harvester about an axis parallel to the axis of articulation of the flap 12, and a second end 20 connected to the lever 14 by the spring 16.

The spring 16 is helical and has one end connected to the end 20 of the lever 15 and the opposite end connected to a lug 18 on the lever 14, which is close to the support shaft 13.

The support shaft 13 has one end 13a projecting outwardly for engagement by a tool for moving the flap 12 from the open position to the closed position.

A microswitch 21 has its movable member 22 cooperating with the lever 15.

Figures 2 and 3 illustrate the levers 14, 15 in the position corresponding to the closed condition of the flap. In this condition, the roller 17 is housed and locked in a seat 23 (see Figure 4) of the lever 15'. The helical spring 16, the load of which is adjustable by means of a tie rod 16a (see Figure 2), tends, in this condition, to keep the roller 17 locked in the seat 23.

Figure 4 illustrates the levers 14, 15 in the mutual position corresponding to the open condition of the flap 12.

When foreign bodies or excessive accumulations of the product exert sufficient force on the flap 12 to overcome the load of the helical spring 16, which keeps the roller 17 locked in the seat 23 of the lever 15, the lever 14 disengages from the lever 15 and the flap 12 moves freely into its open position, thereby opening immediately and completely. Thus, any excess product or foreign bodies may be discharged onto the ground.

When the flap 12 opens, the lever 15 rotates in a clockwise sense (with reference to Figures 3 and 4) whereby the movable member 22 of the switch 21 (which is pressed by the lever 15 in the closed position of the hatch) is consequently actuated. The switch 21 is connected to an electrical system for signalling the opening of the flap to the driver.

When this signalling occurs, the driver must arrange for the hatch to be closed, as illustrated in Figure 2. For this purpose, the driver must use a tool adapted to engage the end 13a of the support shaft 13 of the flap so as to rotate the flap towards its closed position, causing a progressive engagement of the roller 17 on a cam surface 15a of the lever 15 until the roller 17 snap-engages (against the action of the helical spring 16) in the seat 23 (see Figure 3).

The tie rod 16a allows the load of helical spring 16 to be adjusted whenever it is desired to vary the degree of minimum force which must be exerted on the flap 12 to unlock it form the closed position.

Claims:

1.    Combine harvester (1), including a base wall (11) onto which the harvested product is fed and a conveyor roll (10) located above the base wall (11) for moving the product over said wall, in which the base wall (11) includes a flap (12) which can be opened downwardly to discharge any excess product and any foreign bodies onto the ground, characterised in that the harvester (1) further includes means (14-16) for snap-locking the flap (12) in its closed position, and in that the flap (12) is freely movable from its closed position to its open position when it is unlocked by the force exerted by the excess product or foreign bodies.

2.    A combine harvester as  claimed in Claim 1, characterised in that it is provided with signalling means (21) for indicating when the flap (12) is open.

3.    A combine harvester as claimed in Claim 1, characterised in that the means for snap-locking the flap (12) in its closed position include:
       a catch member (14) carried by the flap (12) and movable therewith;
       a locking member (15) displaceable relative to the fixed structure (2) of the combine harvester (1), and
       resilient means (16) biasing the locking member (15) into engagement with the catch member (14).

4.    A combine harvester as claimed in Claim 3, characterised in that the locking member (15) includes a seat (23) for snap-engagement of an engagement element (17) forming part of the catch member (14), when the flap (12) is brought into its closed position.

5. A combine harvester as claimed in Claim 3, characterised in that means (16a) are provided for adjusting the loading of the resilient means (16).

6. A combine harvester as claimed in Claim 3, in which the flap (12) is carried by a shaft which is rotatable on the fixed structure (2) of the harvester (1), characterised in that the catch member (14) comprises a lever which is fixed at one end to the support shaft (13) of the flap (12) and carries an engagement member (17) at the opposite end, in that the locking member is constituted by a lever (15) which is mounted for rotation on the fixed structure (2) of the harvester (1) for rotation about an axis parallel to the articulation axis of the flap (12), and in that the resilient means are constituted by a helical spring (16) connected between the two levers (14,15).

7. A combine harvester as claimed in Claim 6, characterised in that the helical spring (16) is connected between the free end of the lever (15) acting as the locking member and a lug (18) on the lever (14) acting as the catch member, said lug (18) being located close to the support shaft (13) of the flap (2).

8. A combine harvester as claimed in Claim 3, characterised in that the signalling means include an electrical switch (21) having a movable member (22) cooperating with the locking member (15).

9.   A combine harvester as claimed in Claim 6, characterised in that the support shaft (13) for the flap (12) has one end (13a) engageable by an implement for displacing the flap (12) towards its closed position and snap-locking the flap (12) in this closed position.

FIG. 1

FIG. 3

FIG. 2

FIG. 4